# EUROPEAN PATENT SPECIFICATION

(11) **EP 2 495 931 B1**
(45) Date of publication and mention of the grant of the patent: **15.04.2015**
(21) Application number: 12169488.9
(22) Date of filing: 02.05.2008
(51) Int. Cl.: H04L 29/06, H04L 12/22, H04W 12/12, H04W 12/08, G06F 21/00

(54) **Coordinated security systems and methods for an electronic device**
Koordinierte Sicherheitssysteme und Verfahren für eine elektronische Vorrichtung
Systèmes sécuritaires coordonnées et procédés pour un dispositif électronique

(43) Date of publication of application: 05.09.2012
(62) Divisional of application: 08155575.7
(73) Proprietor: BlackBerry Limited, Waterloo, ON N2K 0A7 (CA)
(72) Inventor: Ould, Christoper, Hamilton, Ontario L9A 4P3 (CA)
(74) Representative: Moore, Barry

(56) References cited:
- WO-A-2007/110094
- US-A1- 2003 120 957
- US-A1- 2006 021 006

## Description

### Technical Field

Embodiments described herein relate generally to the operation of a security feature or features on electronic devices and, more particularly, mobile electronic devices.

### Background

Mobile electronic devices are often equipped with a smart card such as a Subscriber Identity Module or "SIM" card in order to send and receive communication signals (such as a cellular phone call). Typically, such SIM cards require network registration and activation procedures involving the use of passwords. Similarly, the use of passwords or other security features may be used to limit or restrict access to the SIM card functionality.

Additionally some electronic devices also provide application functionality which is independent of the SIM card. For example, some devices include device applications which provide address book functionality, scheduling and calendar functionality, video games, digital camera picture-taking and viewing, and multi-media presentations, among others. Often, such applications involve the storing and use of user data or content. Access to these applications, functions and user data is typically restricted or regulated using passwords or other security features.

In the event that an unauthorized user obtains the device and enters an invalid password to the device (often the user is provided multiple opportunities to enter a valid password), the security features delete or otherwise restrict access to the user data and may prevent further use of the device applications or functionality.

WO2007/110094 describes a system for enforcing security policies on mobile communications devices adapted to be used in a mobile communications network in operative association with a subscriber identity module. The system has a client-server architecture comprising a server operated by a mobile communications network operator and a client resident on a mobile communications device on which security policies are to be enforced. The server is adapted to determine security policies to be applied on said mobile communications device, and to send thereto a security policy to be applied. The client is adapted to receive the security policy to be applied from the server, and to apply the received security policy. The server includes a server authentication function adapted to authenticate the security policy to be sent to the mobile communications device; the client is further adapted to asses authenticity of the security policy received from the server by exploiting a client authentication function resident on the subscriber identity module.

US 2006/021006 describes a data security system and method protects stored data from unauthorized access. According to one aspect of the invention, a client computing device communicates periodically with a server. If communications is note established between the client and the server for a selected activation interval and a subsequent grace period, the data is determined to be lost, and programmed security rules are automatically executed.; The server with which the client computer device communicates includes one server located inside the firewall of a particular organization, or a mirror server located outside the firewall, and thereby allow for the re-setting of the activation interval when the client is properly outside of the firewall through communication with the mirror server, as well as the to provide command a control over a lost or stolen client by pushing updated rules if communication is subsequently attempted with the mirror server.

### Summary

Accordingly the present teaching provides a method and device per the independent claims. Advantageous features are provided in the dependent claims.

### Brief Description of the Drawings

For a better understanding of embodiments described herein, and to show more clearly how they may be carried into effect, reference will now be made, by way of example, to the accompanying drawings in which:
FIG. 1 is a block diagram of a mobile device in one example implementation,
FIG. 2 is a block diagram of a communication subsystem component of the mobile device of FIG. 1;
FIG. 3 is a block diagram of a node of a wireless network;
FIG. 4 is a block diagram illustrating components of a host system in one example configuration; and
FIG. 5 is a flowchart illustrating steps in a method of coordinating security systems of a computing device in accordance with at least one embodiment.

### Detailed Description

While certain embodiments of existing mobile electronic devices provide for the disabling of device applications upon receipt of an invalid password, the applicant has noted that the SIM card may remain unaffected. As a result, a thief of the device may be able to continue to utilize the communication functionality until the communication network administrators are notified and the SIM card is blocked from accessing the network or otherwise deactivated.

Furthermore, the applicant has also noted that in addition to SIM cards, other types of communication cards may be used in mobile electronic device applications. Accordingly, by way of example only, other types of communication cards which might be used may include an R-UIM (removable user identity module) or a CSIM (CDMA (code division multiple access) or CDMA 2000 subscriber identity module) or a USIM (universal subscriber identity module) card.

Embodiments described herein are generally directed to a system and method that coordinates two or more typically separate security measures or operations of an electronic device such as, for example, a mobile communications system. In particular, the activation of a first security measure may trigger the activation of a second security measure.

In a broad aspect, there is provided a method for implementing security features of a mobile electronic device. The mobile electronic device may comprise a first security module configured to implement a first security operation and a second security module configured to implement a second security operation. The method includes: detecting a first security event; initiating a first security operation by the first security module; triggering a second security event; and initiating a second security operation by the second security module. The first security operation may include triggering the second security event.

In another broad aspect, there is provided a method for implementing a security feature of an electronic device, the method comprising: detecting an invalid access attempt; in response to said detecting, initiating a first security operation to prevent access to or disable an entity, data, application or function associated with said device and triggering an invalid attempt to access another entity, data, application or function associated with said device to initiate a second security operation to prevent access to or disable said other entity, data, application or function.

Detecting the invalid access attempt may be performed by a first security module.

The step of detecting an invalid access attempt may be initiated by receipt of a message comprising control instructions. The message comprising control instructions may be received from a network administrator.

The first security operation may trigger the invalid access attempt no said other entity, data, application or function associated with said device.

The second security operation may comprise preventing access to or disabling said other entity comprising a device or component communicating with, connected to or inserted into said electronic device. The entity may be another network device linked to the electronic device by a wireline or wireless network connection or by a local connection such as a Universal Serial Bus cable. The entity may comprise a device or component that is insertable into the electronic device and may derive power from said electronic device.

The second security operation may comprise disabling functionality of an entity comprising a communication card of the electronic device such as a SIM card or other card enabling wireless or wireless network connections to other similarly enabled devices or network apparatuses.

Detecting the invalid access attempt may comprise receiving an authorization code and determining that the authorization code does not correspond to previously stored authorization data.

Triggering an invalid attempt to access said other entity, data, application or function associated with said device may comprise knowingly providing an invalid authorization code or data to a second security module associated with said other entity, data, application or function. The method generally resides in detecting an invalid attempt to access the device, data on the device, a function or application performed by the device or even another device or entity connected to, inserted within or communicating with the device and, in response to detecting the invalid access attempt, invoking, i.e. triggering, a deliberate procedure to cause disablement of or prevent access to other, i.e. secondary, data on the device, function or application performed by the device or even yet another device or entity connected to, inserted within or communicating with the device. The process is deliberate to the degree that authorization data known to be incorrect for the other data on the device, function or application performed by the device or even yet another device or entity connected to, inserted within or communicating with the device is provided. The invention is particularly advantageous where the triggered further disablement or access prevention process is applied to an entity that is insertable into the electronic device whereby it is disabled or has access prevention measures applied to it such that, upon removal from the electronic device and insertion into a similar such device, the disablement or access prevention measures are still in effect even when operating in association with said similar such device.

The invalid authorization code or data may be sent to said second security module as many times as are necessary to initiate said second security module to prevent access to or disable said other entity, data, application or function. This may comprise three times, for example,

In another broad aspect, there is provided an electronic device comprising: a module for detecting an invalid access attempt; a first security module coupled with the module, the first security module configured to, in response to a detected invalid access attempt, initiate a first security operation to prevent access to or disable an entity, data, application or function associated with said device and to trigger an invalid attempt to access another entity, data, application or function associated with said device; and a second security module associated with said other entity, data, application or function, said second security module being configured to prevent access to or disable said other entity, data, application or function in response to said triggered invalid access attempt.

In another broad aspect, there is provided a computer-readable medium comprising instructions executable on a processor of an electronic device for causing said electronic device to implement the method of the invention.

In another broad aspect, there is provided a system for implementing security features of an electronic device, the system comprising a processor on which an application executes, wherein the application is programmed to cause the system to implement the method of the invention.

In another broad aspect, there is provided a method for implementing security features of a mobile electronic device, wherein the mobile electronic device comprises: a communication card configured to provide a functionality; a first security module configured to implement a first security operation; and a second security module configured to implement a second security operation, wherein the method comprises: detecting a first security event by the first security module; wherein the first security event comprises receiving an invalid authorization code; implementing a first security operation by the first security module; wherein the first security operation comprises triggering a second security event; implementing a second security operation by the second security module upon the triggering of the second security event; and wherein the second security operation comprises disabling the functionality of the communication card.

These and other aspects and features of various embodiments will be described in greater detail below.

Some embodiments described herein make use of a mobile station. A mobile station is a two-way communication device with advanced data communication capabilities having the capability to communicate with other computer systems, and is also referred to herein generally as a mobile device. A mobile device may also include the capability for voice communications. Depending on the functionality provided by a mobile device, it may be referred to as a data messaging device, a two-way pater, a cellular telephone with data messaging capabilities, a wireless Internet appliance, or a data communication device (with or without telephony capabilities). A mobile device communicates with other devices through a network of transceiver stations.

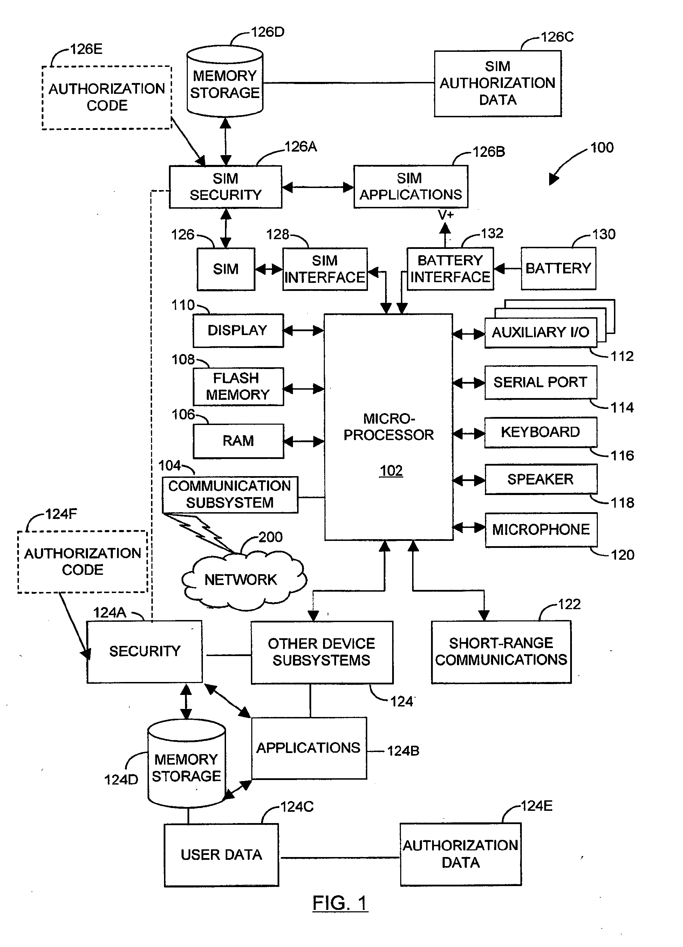

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards may be supplemented or eventually superseded by newer standards such as Enhanced Data GSM Environment (EDGE) and Universal Mobile Telecommunications Service (UMTS), High-Speed Packet Access (HSPA) which may include High-Speed Downlink Packet Access (HSDPA), and Ultra Mobile Broadband (UMB), etc. New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) networks, or CDMA2000 networks, Evolution Data Only (EV-DO) networks, GSM/GPRS networks (as mentioned above), and third-generation (3G) and beyond networks like EDGE, UMTS and HSPA, etc. Some older examples of data-centric networks include the Mobitex™ Radio Network and the DataTAC™ Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications subsystem 122 and other subsystems 124.

Some of the subsystems of mobile device 100 perform communication-rotated functions, whereas other subsystems may provide "resident" or on-device functions. By way of example, display 110 and keyboard 116 may be used for both communication-rotated functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will that the operating system, specific device applications, or parts thereof, may be temporarily loaded into a volatile store such as RAM 106.

Microprocessor 102, in addition to its operating functions, enables execution of software applications on mobile device 100. A set of that control device operations, including data and voice communication applications, may be installed on mobile device 100 during its manufacture. Another application that may be loaded onto mobile device 100 is a information manager (PIM). A PIM has functionality to and manage data of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

The subsystems 124 may include at least one suitably programmed subsystem security module 124A configured to regulate access to one or more of the resident applications and/or functionality 124B. As note above, for example, such resident applications 124B may include a PIM to provide address book functionary, scheduling and calendar functionality, video games, digital camera picture-taking and viewing, and multi-media presentations, among others. Often, such applications involve the storing and use of user data or content 124C including application preferences and settings. As will be understood, such user content 124C may be stored in whole or in part in the flash memory 108, ROM or other appropriate (typically resident) data storage, referred to generally as 124D.

Access to these applications 124B and user data 124C may be restricted or regulated by the security module 124A involving the use of passwords or other security features. Such password functionality may include the storing of authorization data 124E (which may be stored in the data storage 124D or elsewhere). In order to utilize the applications 124B and access the user data 124C, the security module 124A may be programmed to require the user to enter a password or otherwise provide an authorization code 124F from time to time (typically via the display 110 and keyboard 116 although other mechanisms may be used), which is received by the security module 124A and compared to the authorization data 124E.

In certain embodiments, the security module 124A may be operatively coupled to or otherwise in communication with a biometric authorization component, for example, a retinal scanner or a fingerprint scanner (although other biometric scanners might be used), configured to receive unique biometric information from a user in order to confirm the user's identity, In such embodiments, the authorization data 124E might comprise the biometric information of one or more authorized users, while the authorization code 124F might comprise the scanned biometric information from a current user of the device 100.

In the event an authorization code 124F is received by the security module 124A which does not match or otherwise correspond to the authorization data 124E (illustrating one example of a "security event"), access to the user data 124C may be restricted (for example, the user data 124C may be encrypted or and the user may be prevented from accessing the application functionality 124B (such processes may be considered "security operations"). An alternate example of a security event could be the sending of a specially configured electronic message comprising control instructions, by a network administrator (such as an administrator of the LAN 250 described below). Receipt of such a message may cause the triggering of a security event and the corresponding security operation features discussed below.

Mobile device 100 may send and receive communication signals over network 200 after required network registration or activation procedures have been completed. Network access is associated with a subscriber or user of a mobile device 100. To identify a subscriber, mobile device 100 may provide for a Subscriber identity Module or "SIM" card 126 to be inserted in a SIM interface 128 in order to communicate with a network. SIM 126 is one type of a conventional "smart card" or communication card to identify a subscriber of mobile device 100 and to personalize the mobile device 100, among other things. In some alternate embodiments, the mobile device 100 may comprise an iDEN (integrated Digital Enhanced Network) handset, which incorporates the use of SIM cards.

In addition to SIM cards, other types of communication cards may be used in mobile electronic device applications. By way of example only, in alternate embodiments, other types of communication cards which might be used in addition to or in place of SIM cards may include an R-UIM (removable user identity module) or a CSIM (COMA (code division multiple access) subscriber identity module) or a USIM (universal subscriber identity module) card.

Without SIM 126, mobile device 100 may not be fully operational for communication with network 200. By inserting SIM 126 into SIM interface 128, a subscriber can access all subscribed services. Services may include without limitation: web browsing and messaging such as e-mail, voice mail, Short Message Service (SMS), and Multimedia Messaging Services (MMS), and peer-to-peer messages such as PIN-to-PIN which may also be referred to simply as PIN messages. As used in this context, a PIN (personal identification number) generally refers to a number that uniquely identifies the mobile device 100, and a PIN message generally refers to a message addressed to one or more PIN numbers. More advanced services may include without limitation: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

The SIM 126 may include at least one suitably programmed SIM security module 126A configured to regulate access to one or of the communication functionality 124B noted previously.

Access to the SIM communication applications and functionality 126B may be restricted or regulated by the security module 126A involving the use of passwords or other security features. Such password functionality may include the storing of SIM authorization data 126C such as a PIN (personal number) (which may be stored in the data storage 124D, but will often be stored in SIM data storage 126D resident on the SIM card 126). Such PIN data 126C will often be in addition to the PUK ("personal unlocking key") data which is uniquely assigned to the SIM card 126, as will be understood.

In order to utilize the communication applications and functionality 126B, the SIM security module 126A may be programmed to require the user to enter a password or otherwise provide an authorization code 126E from time to time (typically via the display 110 and keyboard 116 although other mechanisms may be used), which is received by the security module 126A and compared to the authorization data 126C. In the event an authorization code 126E is received by the security module 126A which does not match or otherwise correspond to the authorization data 126C (also a "security event"), further access to the communication functionality may be prevented. Typically, a user is given multiple attempts (e.g., three) to enter an acceptable authorization code 126E, before the communication functionality is deactivated (a "security operation").

In addition, the subsystem security module 124A is operatively coupled to the SIM security module 126A, typically via the microprocessor 102. In the case of a security event being detected by the subsystem security module 124A, the security module 124A is programmed to include in its security operations the triggering of a security event for the SIM security module 126A to detect. For example, the subsystem security module 124A may be programmed to trigger the password function of the SIM security system 126A and enter one or more invalid authorization codes 126E until the communication functionality is disabled.

Mobile device 100 may be a battery-powered device and may include a battery interface 132 for receiving one or more rechargeable batteries 130. Battery interface 132 may be coupled to a regulator (not shown), which assists battery 130 in providing power V+ to mobile device 100. Although current technology makes use of a battery, future technologies such as micro fuel cells may provide the power to mobile device 100. In some embodiments, mobile device 100 may be solar-powered.

Short-range communications subsystem 122 provides for communication between mobile device 100 and different systems or devices, without the use of network 200. For example, subsystem 122 may include an infrared device and associated circuits and components for short-range communication, Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then the received for output to display 110 or alternatively to auxiliary I/O subsystem 112, A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 may comprise an alphanumeric keyboard and/or telephone-type keypad. Keyboard 116 may comprise a virtual keyboard or a physical keyboard or both. A composed item may be transmitted over network 200 through communication subsystem 104.

For voice communications, the overall operation of mobile device 100 is substantial similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

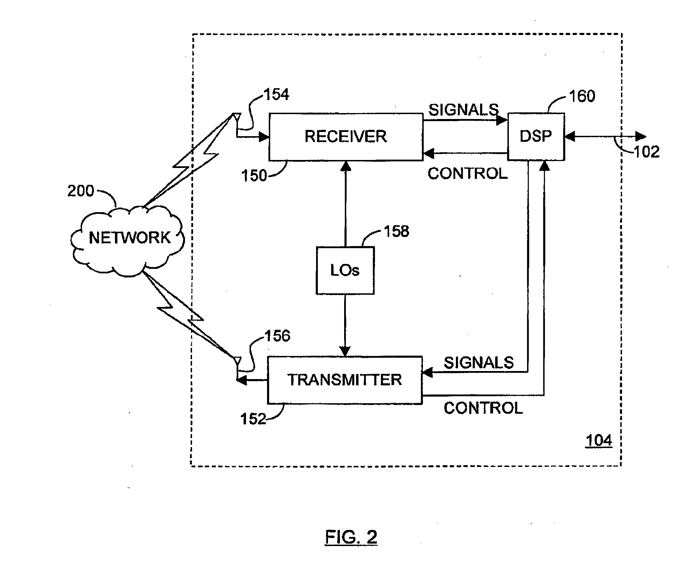

Referring now to FIG. 2, a block diagram of the communications subsystem component 104 of FIG. 1 is shown. Communication subsystem 104 comprises a receiver 150, a transmitter 152, one or more embedded or internal antenna elements 154, 156, Local Oscillators (LOs) 158, and a professing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitted 152 may be keyed or turned on only when it is sending to network 200 may otherwise turned off to conserve resources. Similarly, receiver 150 may be periodically turned off to power until it is to receive signals or information (if at all) during designated time periods.

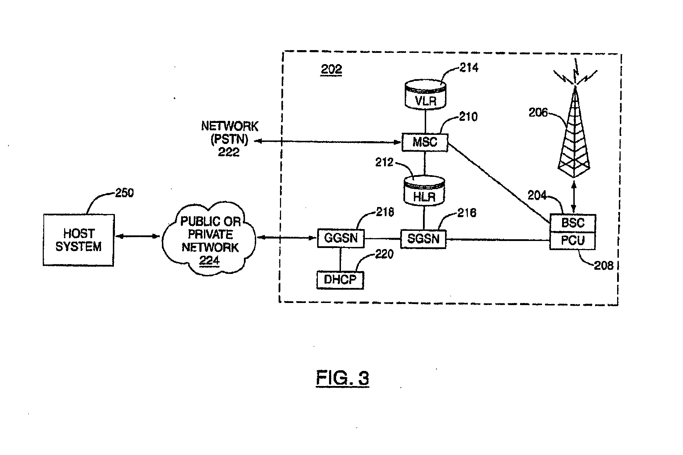

Referring now to FIG. 3, a block diagram of a node of an exemplary wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies; however, in other embodiments, different standards may be implemented as discussed in more detail above. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSJWGPRS network, but rather serves as a list of components that are commonly used in communications through network 200, for ease of illustration.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (internee) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled bey MSC 210

Station 206 comprises a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at frequencies than other nodes.

For all mobile devices 100 registered with a specific network, permanent configuration data such as a user profile is stored in HLR 212. HER 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiting less use of computing resources.

SGSN 216 and GGSN 218 are elements added for GPRS support namely, packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an internet Protocol (IP) backbone network operated within the network 200. During normal operations, a given mobile device 100 performs a "GPRS Attach" to acquire an IP address and to access data services. This normally is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internee domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN), These tunnels are also referred to as Packet Data Protocol (PDP) Contexts and there are a limited number of these available in the network 200. To maximize use of the PDP Contexts, network 200 will run an idle timer for each PDP Context to determine if there is a tack of activity. When a mobile device 100 is not using its PDP Context, the PDP Context can be deallocated and the IP address returned to the IP address pool managed by DHCP server 220.

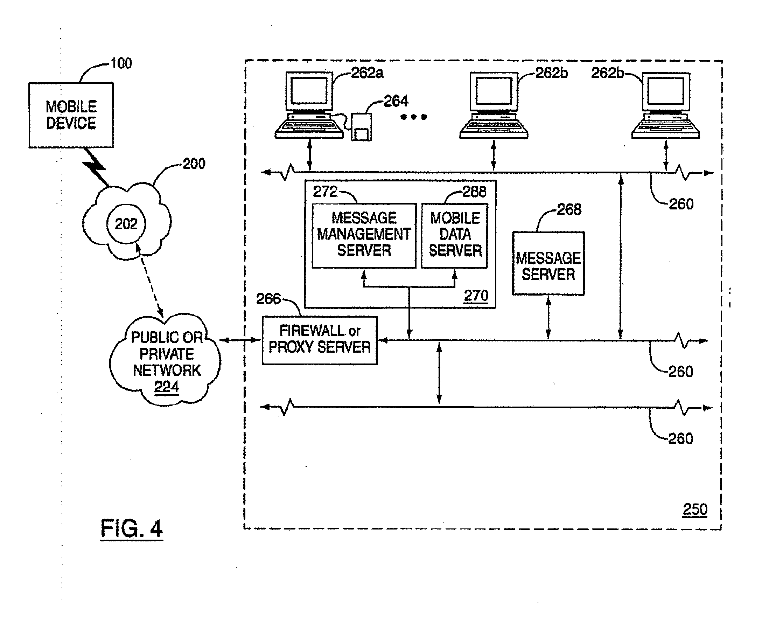

Referring now to FIG. 4, a block diagram illustrating components of a host system in one example configuration is shown. Host system 250 may typically be, for example a corporate office or other local area network (LAN), but may instead be a home office computer or other private system, for example, in variant implementations. As other examples, the host system 250 may comprise a LAWN controlled by a governmental, healthcare, financial, or educational institution. In this example shown in FIG. 4, host system 250 is depicted as a LAN of an organization to which a user of mobile device 100 belongs.

LAN 250 comprises a number of network components connected no each other by LAN connections 260. For instance, a user's desktop computer 262a which may be connected to an accompanying cradle 264 for the user's mobile device 100 is situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates often performed in initializing mobile device 100 for use. The information downloaded to mobile device 100 may include certificates used in the exchange of messages. It will be understood by persons skilled in the art that user computers 262a, 262b will typically be also connected to other peripheral devices not explicitly shown in FIG. 4.

Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. The concept of a wireless VPN router is new in the wireless industry and implies that a VPN connection can be established directly through a specific wireless network to mobile device 100. The possibility of using a wireless VPN router has only recently been available and could be used when the new Internet Protocol (IP) Version 6 (IPV6) arrives into IP-based wireless networks. This new protocols will provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection may include, for example, a Transmission Control Protocol (TCP)/IP or User Datagram Protocol (UDP)/lP connection to deliver the messages directly to mobile device 100 in this variant implementation.

Messages intended for a user of mobile device 100 are initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange™ Server. In some implementations, LAN 250 may comprise multiple message servers 268. Message server 268 may also be adapted to provide additional functions beyond message management, including the management of data associated with calendars and task lists, for example.

When messages are received by message server 268, they are typically stored in a message store [not explicitly shown], from which messages can be subsequently retrieved and delivered to users. For instance, an e-mail client application operating on a user's computer 262a may request the e-mail messages associated with that user's account stored on message server 268. These messages may then typically be retrieved from message server 268 and stored locally on computer 262a.

When operating mobile device 100, the user may wish to have e-mail messages retrieved for delivery to the handheld. An e-mail client application operating on mobile device 100 may also request messages associated with the user's account from message server 268. The e-mail client may be configured (either by the user or by an administrator, possibly in accordance with an organization's information technology (IT) policy) to make this request at the direction of the user, at some pre-defined time interval or upon the occurrence of some pre-defined event. In some implementations, mobile device 100 is assigned its own e-mail address, and messages addressed specifically to mobile device 100 are automatically redirected to mobile device 100 as they are received by message server 268.

To facilitate the wireless communication of messages and message-related data between mobile device 100 and components of LAN 250, a number of wireless communications support components 270 may be provided. In this example implementation, wireless communications support components 270 comprise a message management server 272 and mobile data server 288, for example. Message management server 272 is used to specifically provide support for the management of messages, such as e-mail messages, that are to be handled by mobile devices. Generally, while messages are still stored on message server 268, message management server 272 can be used to control when, if, and how messages should be sent to mobile device 100. Message management server 272 also facilitates the handling of messages composed on mobile device 100, which are sent to message server 268 for subsequent delivery.

For example, message management server 272 may: monitor the user's "mailbox" (e.g. the message store associated with the user's account on message server 268) for new e-mail messages, apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with lT policy) and enforced by message management server 272. These may include whether mobile device 100 may receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be adapted to provide other control functions, such as only pushing certain message information or pre-defined portions (e.g. "blocks") of a message stored on message server 268 to mobile device 100. For example, when a message is initially retrieved by mobile device 100 from message server 268, message management server 272 is adapted to push only the first part of a message to mobile device 100, with the part being of a pre-defined size (eg. 2 KB). The user can then request more of the message, to be delivered in similar-sized blocks by message management server 272 to mobile device 100, possibly up to a maximum pre-defined message size.

Accordingly, message management server 272 facilitates better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices is supported.

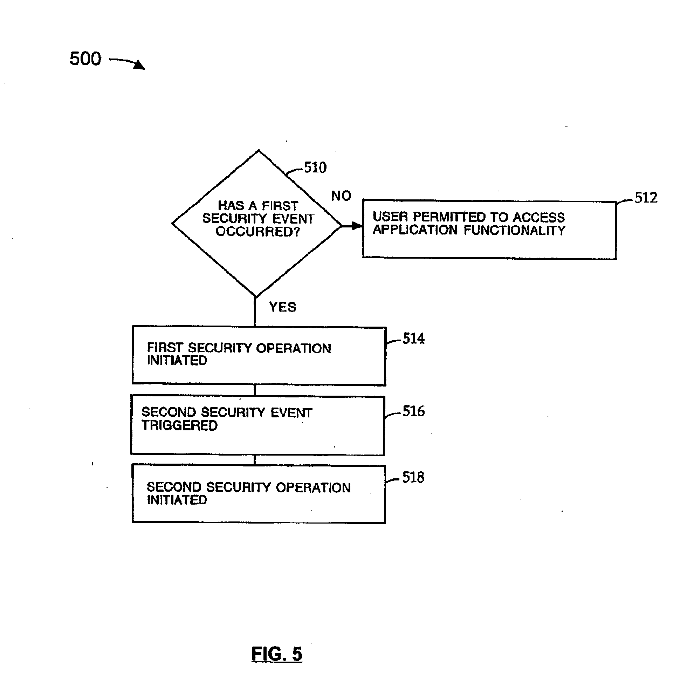

Referring now to FIG. 5, a flowchart illustrating steps in a method of implementing the security features of a mobile device in accordance with at least one embodiment is shown generally as 500. Additional details of some of the features described below in respect of the steps of method 500 may be described earlier in the present specification.

The steps of method 500 are performed at the computing device. In one embodiment, at least some of the steps of the method are performed by one or more security modules that execute and reside on a mobile device (e.g. mobile device 100 of FIG. 1). Furthermore, the security modules need not be stand-alone applications, and the functionality of the security modules may be implemented in one or more applications executing and residing on the mobile or other computing device.

Generally, in method 500, a security event detected by one security module causes the triggering of the security features provided by another security module. The steps of method 500 are described in further detail below.

Method 500 commences at block 510 with the security module 124A determining if a security event has occurred. For example, the detection of such a security event may result from the user attempting to access application functionality 124B and has been prompted by the subsystem security module 124A to input an authorization code 124F, such as a password. The security module 124A determines if the authorization code 124F corresponds to the authorization data 124E. Alternatively, as previously noted, a network administrator may trigger a security event by sending an appropriately configured security message to the device 100.

As noted above, in certain embodiments, the authorization code 124F might alternately or additionally comprise biometric data from the current user. Accordingly, in such an embodiment, an invalid authorization code as contemplated in block 510 may involve, for example, a fingerprint swipe from the user which fails to match an authorized fingerprint swipe stored in data storage 124D.

If no security event is detected, at block 512, the user is permitted to access the application functionality. For example, if the authorization code 124F received by the security module 124A matches or otherwise corresponds to the authorization data 124E, the user's authorization is confirmed. Thus, the user is permitted to access the application functionality 124B.. However, if a security event is detected, at block 514 the first security operation is initiated. For example, if the authorization code 124F is invalid as it does not match or otherwise correspond to the authorization data 124E, the security module 124A is programmed to effect one or more security operations. Such security operations may include preventing access to the user data 124C and to the applications 124B. As noted previously, this step may involve the encryption or deletion of the user data 124C. As well, as previously suggested, the user may be given multiple opportunities to enter an authorization code 124F which corresponds to the authorization data 124E.

At block 516, the first security operation also includes triggering a second security event.. At block 518, the second security event initiates the second security operation. For example, such a second security event may be triggered by the first security module 124A entering one or more invalid SIM authorization codes 126E until the SIM security module's 126A programming initiates its security operation, such as for example disabling the SIM card 126 and its communication functionality.

Subsequent to the disabling of the SIM card 126 in block 516, in certain embodiments, the user may contact the communication network administrators to unblock the SIM card 126 to reestablish its communication functionality and allow the SIM card 126 to access the network.

While the example embodiments discussed herein illustrate the interconnection of a subsystem security module 124A with a SIM security module 126A, it should be understood that two or more security modules regulating access to different applications' functionality may be interconnected in accordance with the teaching set out herein.

As will be understood, in the event a thief or an otherwise unauthorized individual obtains possession of the device 100, by such individual entering an invalid password to access one application functionality or otherwise triggering a security event, a domino effect will result with one or more other security modules being activated to detect a corresponding security event and implement its or their security features and restrict access to its or their corresponding application functionality.

The invention has been described with regard to a number of embodiments. However, it will be understood by persons skilled in the art that other variants and modifications may be made without departing from the scope of the invention as defined in the claims appended hereto.

The following numbered clauses correspond to the clauses of the parent application as originally filed.
1. A method for implementing a security feature of an electronic device (100), the method comprising:
   detecting an invalid access attempt;
   in response to said detecting, initiating a first security operation to prevent access to or disable an entity, data, application or function associated with said device and triggering an invalid attempt to access another entity, data, application or
   function associated with said device to initiate a second security operation to prevent access to or disable said other entity, data, application or function.
2. The method of clause 1, wherein detecting the invalid access attempt is performed by a first security module (124A).
3. The method of clause 1 or clause 2, wherein the step of detecting an invalid access attempt is initiated by receipt of a message comprising control instructions.
4. The method of clause 3, wherein the message comprising control instructions is received from a network administrator.
5. The method of clause 2, or clause 3 or clause 4 when dependent on clause 2, wherein the first security operation triggers the invalid access attempt to said other entity, data, application or function associated with said device.
6. The method of anyone of the preceding clauses, wherein the second security operation comprises preventing access to or disabling said other entity comprising a device or component communicating with, connected to or inserted into said electronic device.
7. The method of anyone of the clauses 1 to 5, wherein the second security operation comprises disabling functionality of an entity comprising a communication card (126) of the electronic device.
8. The method of anyone of the preceding clauses, wherein detecting the invalid access attempt comprises receiving an authorization code (124F) and determining that the authorization code (124F) does not correspond to previously stored authorization data.
9. The method of any preceding clause, wherein triggering an invalid attempt to access said other entity, data, application or function associated with said device comprises knowingly providing an invalid authorization code or data to a second security module (126A) associated with said other entity, data, application or function.
10. The method of clause 9, wherein the invalid authorization code or data is sent to said second security module (126A) as many times as are necessary to initiate said second security module (126A) to prevent access to or disable said other entity, data, application or function.
11. An electronic device (100) comprising:
   a module (1248) for detecting an invalid access attempt;
   a first security module (124A) coupled with the module (1248), the first security module configured to, in response to a detected invalid access attempt, initiate a first security operation to prevent access to or disable an entity, data, application or function associated with said device and to trigger an invalid attempt to access another entity, data, application or function associated with said device; and
   a second security module (126A) associated with said other entity, data, application or function, said second security module (126A) being configured to prevent access to or disable said other entity, data, application or function in response to said triggered invalid access attempt.
12. The electronic device (100) of clause 11, wherein the first security module (124A) is configured to detect an invalid access attempt in response to receipt of a message comprising control instructions.
13. The electronic device (100) of clause 12, wherein the first security module (124A) is configured to receive the message comprising control instructions from a network administrator.
14. The electronic device (100) of any one of clauses 11 to 13, wherein the first security module (124A) is configured to trigger said invalid access attempt to said other entity, data, application or function associated with said device.
15. The electronic device (100) of any one of clauses 11 to 14, wherein the second security module (126A) is configured to prevent access to or disabling said other entity comprising a device or component communicating with, connected to or inserted into said electronic device.
16. The electronic device (100) of anyone of clauses 11 to 15, wherein the second security module (126A) is configured to disable functionality of an entity comprising a communication card (126) of the electronic device.
17. The electronic device (100) of anyone of clauses 11 to 16, wherein the second security module (126A) is configured to prevent access to or disable said other entity comprising a device or component communicating with, connected to or inserted into said electronic device.
18. The electronic device (100) of anyone of clauses 11 to 17, wherein the first security module (124A) is configured to trigger an invalid attempt to access said other entity, data, application or function associated with said device by knowingly providing an invalid authorization code or data to said second security module (126A).
19. The electronic device (100) of clause 18, wherein the first security module (124A) is configured to send the invalid authorization code or data to said second security module (126A) as many times as are necessary to initiate said second security module (126A) to prevent access to or disable said other entity, data, application or function.
20. The electronic device (100) of anyone of clauses 11 to 19, wherein the device further comprises a user data storage (1240) configured to store user data (124C) and wherein the first security module (124A) is further configured to disable access to or to delete the user data (124C) when implementing the first security operation.
21. The electronic device (100) of anyone of clauses 11 to 20, wherein the device further comprises authorization data storage (1240) for storing authorization data (124E) and wherein the first security module (124A) is further configured to receive a first authorization code (124F) and compare the first authorization code (124F) to first authorization data (124E) stored in the authorization data storage (1240) in order to detect an invalid access attempt.
22. The electronic device (100) of clause 21, wherein the first security module (124A) is further configured to implement said first security operation upon determining that the first authorization code (124F) does not correspond to the first authorization data (124E).
23. The electronic device (100) of clause 22, wherein the second security module (126A) is further configured to receive a second authorization code (126E) and compare the second authorization code (126E) to second authorization data (126C) stored in the authorization data storage (126D).
24. The electronic device of clause 23, wherein the second security module (126A) is further configured to implement said second security operation upon determining that the second authorization code (126E) does not correspond to the second authorization data (126C).
25. The electronic device of anyone of clauses 11 to 24, wherein the device comprises a mobile electronic device.
26. A computer-readable medium comprising instructions executable on a processor (102) of an electronic device (100) for causing said electronic device to implement the method of anyone of clauses 1 to 10.
27. A system for implementing security features of an electronic device (100), the system comprising a processor (102) on which an application executes, wherein the application is programmed to cause the system to implement the method of anyone of clauses 1 to 10.
28. A method for implementing security features of a mobile electronic device (102), wherein the mobile electronic device (100) comprises: a communication card (126) configured to provide a functionality; a first security module (124A) configured to implement a first security operation; and a second security module (126A) configured to implement a second security operation, wherein the method comprises:
   detecting a first security event by the first security module (124A);
   wherein the first security event comprises receiving an invalid authorization code (124F);
   implementing a first security operation by the first security module (124A);
   wherein the first security operation comprises triggering a second security event;
   implementing a second security operation by the second security module (126A) upon the triggering of the second security event; and
   wherein the second security operation comprises disabling the functionality of the communication card (126).

## Claims

1. A method for implementing security features of a mobile electronic device (100) comprising a communication card (126), wherein the method comprises:
detecting a first security event by a first security module (124A);
wherein the first security event comprises receiving an invalid authorization code (124F);
in response to detecting the first security event, implementing a first security operation by the first security module (124A);
wherein the first security operation comprises triggering a second security event different from the first security event;
in response to the second security event, implementing a second security operation by a second security module (126A) different from the first security module; and
wherein the second security operation comprises disabling the functionality of the communication card (126).

2. The method as claimed in claim 1, wherein the first security event comprises determining that the invalid authorization code (124F) does not correspond to previously stored authorization data.

3. The method as claimed in any preceding claim, wherein triggering the second security event comprises knowingly providing an invalid authorization code to the second security module (126A).

4. The method as claimed in any preceding claim, wherein the invalid authorization code is sent to said second security module (126A) as many times as are necessary to initiate said second security module (126A) to prevent access to or disable the functionality of the communication card (126).

5. The method as claimed in any preceding claim, wherein the authorization data comprises biometric information.

6. An electronic device (100) comprising:
a communication card (126) configured to provide a functionality;
a module (124B) for detecting an invalid access attempt;
a first security module (124A) coupled with the module (124B), the first security module configured to implement a first security operation upon detecting a first security event;
wherein the first security event comprises receiving an invalid authorization code (124F);
wherein the first security operation comprises triggering a second security event different from the first security event; and
a second security module (126A) different from the first security module configured to implement a second security operation upon detecting the second security event;
wherein the second security operation comprises disabling the functionality of the communication card (126).

7. The electronic device (100) as claimed in claim 6, wherein the first security module (124A) is configured to trigger a second security event by knowingly providing an invalid authorization code or data to said second security module (126A).

8. The electronic device (100) as claimed in claim 7, wherein the first security module (124A) is configured to send the invalid authorization code or data to said second security module (126A) as many times as are necessary to initiate said second security module (126A) to prevent access to or disable the functionality of the communication card (126).

9. The electronic device (100) as claimed in any one of claims 6 to 8, wherein the device further comprises a user data storage (124D) configured to store user data (124C) and wherein the first security module (124A) is further configured to disable access to or to delete the user data (124C) when implementing the first security operation.

10. The electronic device (100) as claimed in any one of claims 6 to 9, wherein the device further comprises authorization data storage (124D) for storing authorization data (124E) and wherein the first security module (124A) is further configured to compare the invalid authorization code (124F) to first authorization data (124E) stored in the authorization data storage (124D) in order to detect an invalid access attempt.

11. The electronic device (100) as claimed in claim 10, wherein the second security module (126A) is further configured to receive a second authorization code (126E) and compare the second authorization code (126E) to second authorization data (126C) stored in the authorization data storage (126D).

12. The electronic device as claimed in claim 11, wherein the second security module (126A) is further configured to implement said second security operation upon determining that the second authorization code (126E) does not correspond to the second authorization data (126C).

13. The electronic device as claimed in any of claims 10 to 12, wherein the authorization data comprises biometric information.

14. The electronic device as claimed in any of claims 6 to 13, wherein the electronic device comprises a mobile electronic device.

15. A computer-readable medium comprising instructions executable on a processor (102) of an electronic device (100) for causing said electronic device to implement the method of any one of claims 1 to 5.

## Patentansprüche

1. Verfahren zum Durchführen von Sicherheitsfunktionen auf einer elektronischen Mobilvorrichtung (100) mit einer Kommunikationskarte (126), wobei das Verfahren Folgendes aufweist:
Erfassen eines ersten Sicherheitsereignisses durch ein erstes Sicherheitsmodul (124A),
wobei das erste Sicherheitsereignis ein Empfangen eines ungültigen Autorisierungscodes (124F) aufweist,
Durchführen eines ersten Sicherheitsvorganges durch das erste Sicherheitsmodul (124A) als Reaktion auf das Erfassen des ersten Sicherheitsereignisses,
wobei der erste Sicherheitsvorgang ein Auslösen eines zweiten Sicherheitsereignisses aufweist, das von dem ersten Sicherheitsereignis verschieden ist,
Durchführen eines zweiten Sicherheitsvorganges durch ein zweites Sicherheitsmodul (126A), das von dem ersten Sicherheitsmodul verschieden ist, als Reaktion auf das zweite Sicherheitsereignis, und
wobei der zweite Sicherheitsvorgang ein Abschalten der Funktionalität der Kommunikationskarte (126) aufweist.

2. Verfahren nach Anspruch 1, wobei das erste Sicherheitsereignis ein Bestimmen, dass der ungültige Autorisierungscode (124F) nicht zuvor gespeicherten Autorisierungsdaten entspricht, aufweist.

3. Verfahren nach einem der vorhergehenden Ansprüche, wobei das Auslösen des zweiten Sicherheitsereignisses ein wissentliches Bereitstellen eines ungültigen Autorisierungscodes an das zweite Sicherheitsmodul (126A) aufweist.

4. Verfahren nach einem der vorhergehenden Ansprüche, wobei der ungültige Autorisierungscode so oft wie nötig an das zweite Sicherheitsmodul (126A) gesendet wird, um einzuleiten, dass das zweite Sicherheitsmodul (126A) einen Zugriff auf die Kommunikationskarte (126) verhindert oder ihre Funktionalität abschaltet.

5. Verfahren nach einem der vorhergehenden Ansprüche, wobei die Autorisierungsdaten biometrische Information aufweisen.

6. Elektronische Vorrichtung (100) mit:
einer Kommunikationskarte (126), die dazu konfiguriert ist, eine Funktionalität bereitzustellen,
einem Modul (124B) zum Erfassen eines ungültigen Zugriffsversuchs,
einem ersten Sicherheitsmodul (124A), das an das Modul (124B) gekoppelt ist, wobei das erste Sicherheitsmodul dazu konfiguriert ist, einen ersten Sicherheitsvorgang nach Erfassen eines ersten Sicherheitsereignisses durchzuführen,
wobei das erste Sicherheitsereignis ein Empfangen eines ungültigen Autorisierungscodes (124F) aufweist,
wobei der erste Sicherheitsvorgang ein Auslösen eines zweiten Sicherheitsereignisses aufweist, das von dem ersten Sicherheitsereignis verschieden ist, und
einem zweiten Sicherheitsmodul (126A), das von dem ersten Sicherheitsmodul verschieden ist und dazu konfiguriert ist, nach Erfassen des zweiten Sicherheitsereignisses einen zweiten Sicherheitsvorgang durchzuführen,
wobei der zweite Sicherheitsvorgang ein Abschalten der Funktionalität der Kommunikationskarte (126) aufweist.

7. Elektronische Vorrichtung (100) nach Anspruch 6, wobei das erste Sicherheitsmodul (124A) dazu konfiguriert ist, ein zweites Sicherheitsereignis durch wissentliches Bereitstellen von einem ungültigen Autorisierungscode oder -daten an das zweite Sicherheitsmodul (126A) auszulösen.

8. Elektronische Vorrichtung (100) nach Anspruch 7, wobei das erste Sicherheitsmodul (124A) dazu konfiguriert ist, den ungültigen Autorisierungscode oder -daten so oft wie nötig an das zweite Sicherheitsmodul (126A) zu senden, um einzuleiten, dass das zweite Sicherheitsmodul (126A) einen Zugriff auf die Kommunikationskarte (126) verhindert oder ihre Funktionalität abschaltet.

9. Elektronische Vorrichtung (100) nach einem der Ansprüche 6 bis 8, wobei die Vorrichtung ferner einen Benutzerdatenspeicher (124D) aufweist, der dazu konfiguriert ist, Benutzerdaten (124C) zu speichern, und wobei das erste Sicherheitsmodul (124A) ferner dazu konfiguriert ist, einen Zugriff auf die Benutzerdaten (124C) abzuschalten oder diese zu löschen, während der Durchführung des ersten Sicherheitsvorganges.

10. Elektronische Vorrichtung (100) nach einem der Ansprüche 6 bis 9, wobei die Vorrichtung ferner einen Autorisierungsdatenspeicher (124D) zum Speichern von Autorisierungsdaten (124E) aufweist und wobei das erste Sicherheitsmodul (124A) ferner dazu konfiguriert ist, den ungültigen Autorisierungscode (124F) mit ersten Autorisierungsdaten (124E) zu vergleichen, die in dem Autorisierungsdatenspeicher (124D) gespeichert sind, um einen ungültigen Zugriffsversuch zu erfassen.

11. Elektronische Vorrichtung (100) nach Anspruch 10, wobei das zweite Sicherheitsmodul (126A) ferner dazu konfiguriert ist, einen zweiten Autorisierungscode (126E) zu empfangen und den zweiten Autorisierungcode (126E) mit zweiten Autorisierungsdaten (126C) zu vergleichen, die in dem Autorisierungsdatenspeicher (126D) gespeichert sind.

12. Elektronische Vorrichtung nach Anspruch 11, wobei das zweite Sicherheitsmodul (126A) ferner dazu konfiguriert ist, nach Bestimmen, dass der zweite Autorisierungscode (126E) nicht den zweiten Autorisierungsdaten (126C) entspricht, den zweiten Sicherheitsvorgang durchführen.

13. Elektronische Vorrichtung nach einem der Ansprüche 10 bis 12, wobei die Autorisierungsdaten biometrische Information aufweisen.

14. Elektronische Vorrichtung nach einem der Ansprüche 6 bis 13, wobei die elektronische Vorrichtung eine elektronische Mobilvorrichtung aufweist.

15. Computerlesbares Medium mit Anweisungen, die auf einem Prozessor (102) einer elektronischen Vorrichtung (100) ausführbar sind, um zu veranlassen, dass die elektronische Vorrichtung, das Verfahren nach einem der Ansprüche 1 bis 5 durchführt.

## Revendications

1. Procédé pour mettre en oeuvre des caractéristiques de sécurité d'un dispositif électronique mobile (100) comprenant une carte de communication (126), dans lequel le procédé comprend :
la détection d'un premier événement de sécurité par un premier module de sécurité (124A) ;
dans lequel le premier événement de sécurité comprend la réception d'un code d'autorisation invalide (124F) ;
en réponse à la détection du premier événement de sécurité, la mise en oeuvre d'une première opération de sécurité par le premier module de sécurité (124A) ;
dans lequel la première opération de sécurité comprend le déclenchement d'un second événement de sécurité différent du premier événement de sécurité ;
en réponse au second événement de sécurité, la mise en oeuvre d'une seconde opération de sécurité par un second module de sécurité (126A) différent du premier module de sécurité ; et
dans lequel la seconde opération de sécurité comprend la désactivation de la fonctionnalité de la carte de communication (126).

2. Procédé selon la revendication 1, dans lequel le premier événement de sécurité comprend la détermination que le code d'autorisation invalide (124F) ne correspond pas à des données d'autorisation stockées précédemment.

3. Procédé selon l'une quelconque des revendications précédentes, dans lequel le déclenchement du second événement de sécurité comprend le fait de fournir sciemment un code d'autorisation invalide au second module de sécurité (126A).

4. Procédé selon l'une quelconque des revendications précédentes, dans lequel le code d'autorisation invalide est envoyé audit second module de sécurité (126A) autant de fois qu'il est nécessaire pour initier ledit second module de sécurité (126A) pour empêcher l'accès à ou désactiver la fonctionnalité de la carte de communication (126).

5. Procédé selon l'une quelconque des revendications précédentes, dans lequel les données d'autorisation comprennent des informations biométriques.

6. Dispositif électronique (100) comprenant :
une carte de communication (126) configurée pour fournir une fonctionnalité ;
un module (124B) pour détecter une tentative d'accès invalide ;
un premier module de sécurité (124A) couplé au module (124B), le premier module de sécurité configuré pour mettre en oeuvre une première opération de sécurité lors de la détection d'un premier événement de sécurité ;
dans lequel le premier événement de sécurité comprend la réception d'un code d'autorisation invalide (124F) ;
dans lequel la première opération de sécurité comprend le déclenchement d'un second événement de sécurité différent du premier événement de sécurité ; et
un second module de sécurité (126A) différent du premier module de sécurité configuré pour mettre en oeuvre une seconde opération de sécurité lors de la détection du second événement de sécurité ;
dans lequel la seconde opération de sécurité comprend la désactivation de la fonctionnalité de la carte de communication (126).

7. Dispositif électronique (100) selon la revendication 6, dans lequel le premier module de sécurité (124A) est configuré pour déclencher un second événement de sécurité en fournissant sciemment un code d'autorisation invalide ou des données audit second module de sécurité (126A).

8. Dispositif électronique (100) selon la revendication 7, dans lequel le premier module de sécurité (124A) est configuré pour envoyer le code d'autorisation invalide ou les données audit second module de sécurité (126A) autant de fois qu'il est nécessaire pour initier ledit second module de sécurité (126A) pour empêcher l'accès à ou désactiver la fonctionnalité de la carte de communication (126).

9. Dispositif électronique (100) selon l'une quelconque des revendications 6 à 8, dans lequel le dispositif comprend en outre un stockage de données d'utilisateur (124D) configuré pour stocker des données d'utilisateur (124C) et dans lequel le premier module de sécurité (124A) est en outre configuré pour désactiver l'accès à ou pour supprimer les données d'utilisateur (124C) lors de la mise en oeuvre de la première opération de sécurité.

10. Dispositif électronique (100) selon l'une quelconque des revendications 6 à 9, dans lequel le dispositif comprend en outre un stockage de données d'autorisation (124D) pour stocker des données d'autorisation (124E) et dans lequel le premier module de sécurité (124A) est en outre configuré pour comparer le code d'autorisation invalide (124F) à des premières données d'autorisation (124E) stockées dans le stockage de données d'autorisation (124D) afin de détecter une tentative d'accès invalide.

11. Dispositif électronique (100) selon la revendication 10, dans lequel le second module de sécurité (126A) est en outre configuré pour recevoir un second code d'autorisation (126E) et comparer le second code d'autorisation (126E) à des secondes données d'autorisation (126C) stockées dans le stockage de données d'autorisation (126D).

12. Dispositif électronique selon la revendication 11, dans lequel le second module de sécurité (126A) est en outre configuré pour mettre en oeuvre ladite seconde opération de sécurité lors de la détermination que le second code d'autorisation (126E) ne correspond pas aux secondes données d'autorisation (126C).

13. Dispositif électronique selon l'une quelconque des revendications 10 à 12, dans lequel les données d'autorisation comprennent des informations biométriques.

14. Dispositif électronique selon l'une quelconque des revendications 6 à 13, dans lequel le dispositif électronique comprend un dispositif électronique mobile.

15. Support lisible par ordinateur comprenant des instructions exécutables sur un processeur (102) d'un dispositif électronique (100) pour amener ledit dispositif électronique à mettre en oeuvre le procédé selon l'une quelconque des revendications 1 à 5.
